# EUROPEAN PATENT APPLICATION

(11) **EP 4 730 142 A1**
(43) Date of publication of application: **22.04.2026**
(21) Application number: 24218931.4
(22) Date of filing: 11.12.2024
(51) Int. Cl.: G06F 12/0802, G06N 3/063, H04N 19/423

(54) **VIDEO MEMORY MANAGEMENT METHODS FOR LARGE LANGUAGE MODEL INFERENCE, DEVICES, MEDIA, AND PRODUCTS**

(30) Priority: 15.10.2024 CN 202411442369
(71) Applicant: Alipay (Hangzhou) Information Technology Co., Ltd., Hangzhou, Zhejiang 310000 (CN)
(72) Inventor: ZHANG, Rui, Hangzhou, Zhejiang Province 310000 (CN); ZHAO, Junping, Hangzhou, Zhejiang Province 310000 (CN)
(74) Representative: Winter, Brandl - Partnerschaft mbB

(57) **Abstract**

This specification provides video memory management methods for large language model inference, devices, media, and products, which are applied to a service device deployed with a large language model. The method includes: allocating physical video memory resources on the service device, to separately map the physical video memory resources to a first video memory resource pool in which a cache object is a key-value cache and a second video memory resource pool in which a cache object is an intermediate activation value; and for an inference task submitted to the large language model, upon determining that an idle video memory resource in any video memory resource pool is insufficient to cache a corresponding cache object for the inference task, temporarily transferring at least a portion of idle video memory resources in another video memory resource pool to the any video memory resource pool.

## Description

### TECHNICAL FIELD

One or more embodiments of this specification relate to the field of artificial intelligence technologies, and in particular, to video memory management methods for large language model inference, devices, media, and products.

### BACKGROUND

Large language models (LLM) are a type of deep learning-based neural network models specially designed for understanding and generating natural language texts. Statistical rules and semantic structures of languages are learned by using large-scale training datasets, so that the LLM can have excellent performance in a variety of natural language processing tasks, including text generation, machine translation, sentiment analysis, question and answer systems, etc. Due to powerful generalization and versatility, the LLM is widely used in the field of artificial intelligence.

In an inference process, the LLM needs to occupy a large quantity of graphics processing unit (GPU) video memories. If video memory resources are not properly scheduled, more video memory resources may need to be deployed and consequently infrastructure costs are excessively high, or an inference speed and throughput performance are affected due to insufficient video memory resources.

### SUMMARY

In view of this, one or more embodiments of this specification provide the following technical solutions:
According to a first aspect of one or more embodiments of this specification, a video memory management method for large language model inference is provided, applied to a service device deployed with a large language model. The method includes:
allocating physical video memory resources on the service device, to separately map the physical video memory resources to a first video memory resource pool in which a cache object is a key-value cache and a second video memory resource pool in which a cache object is an intermediate activation value; and
for an inference task submitted to the large language model, upon determining that an idle video memory resource in any video memory resource pool in the first video memory resource pool and the second video memory resource pool is insufficient to cache a corresponding cache object for the inference task, temporarily transferring at least a portion of idle video memory resources in another video memory resource pool to the any video memory resource pool.

According to a second aspect of one or more embodiments of this specification, an electronic device is provided, including: a processor; and a memory configured to store executable instructions of the processor. The processor runs the executable instructions to implement steps of the method according to the first aspect.

According to a third aspect of one or more embodiments of this specification, a computer-readable storage medium is provided. The computer-readable storage medium stores computer instructions, and when the instructions are executed by a processor, steps of the method according to the first aspect is implemented.

According to a fourth aspect of one or more embodiments of this specification, a computer program product is provided, including a computer program/instructions. When the computer program/instructions is/are executed by a processor, steps of the method according to the first aspect is implemented.

It can be learned from the above-mentioned embodiments that, in this specification, the corresponding first video memory resource pool and second video memory resource pool are respectively created for the key-value cache and the intermediate activation value, so that mutual interference between the key-value cache and the intermediate activation value can be avoided when video memory resources are sufficient. In addition, the first video memory resource pool and the second video memory resource pool are managed uniformly. In this specification, dynamic scheduling and elastic management can be performed on the idle video memory resource based on an actual need, so that the key-value cache can temporarily borrow a video memory resource originally allocated to the second video memory resource pool for the intermediate activation value to use, and the intermediate activation value can also temporarily borrow a video memory resource originally allocated to the first video memory resource pool for the key-value cache to use. This greatly improves scheduling flexibility and utilization of the video memory resource, thereby helping shorten an inference time of the LLM and improve throughput performance of the LLM in a case of fixed infrastructure costs.

### BRIEF DESCRIPTION OF DRAWINGS

FIG. 1 is a flowchart illustrating a video memory management method for large language model inference, according to some example embodiments;
FIG. 2 is a flowchart illustrating video memory scheduling performed in a prefill phase, according to some example embodiments;
FIG. 3 is a flowchart illustrating video memory scheduling performed in a decode phase, according to some example embodiments;
FIG. 4 is a schematic diagram illustrating an architecture of a scheduling management system for a video memory resource, according to some example embodiments;
FIG. 5 is a schematic diagram illustrating a structure of a device, according to some example embodiments; and
FIG. 6 is a block diagram illustrating a video memory management apparatus for large language model inference, according to some example embodiments.

### DESCRIPTION OF EMBODIMENTS

An inference process of a large language model (LLM) based on a transformer structure is usually divided into two main phases: a prefill phase and a decode phase. In the prefill phase, the LLM generates, based on a prompt input by a user, the first output token and a tensor referred to as a key-value cache (KV Cache). In the decode phase, the LLM repeats an auto-regression step. Each time the auto-regression step is performed, the LLM uses a previous output token and a generated KV cache as inputs to generate a next output token and an updated KV cache. For example, when the auto-regression step is performed for the first time, a previous output token is the first output token generated in the prefill phase, and a generated KV cache is the KV cache generated in the prefill phase; when the auto-regression step is performed for the second time, a previous output token is an output token generated when the auto-regression step is performed for the first time, and a generated KV cache is a KV cache updated when the auto-regression step is performed for the first time; and by analogy, until the LLM generates a complete output.

In the decode phase, generated KV caches need to be continuously used to generate output tokens. Therefore, the KV cache is also cached in a video memory of a GPU, to improve access performance for the KV cache. In addition to the KV cache, a large quantity of video memory resources are further needed to cache a weight, an intermediate activation value (ACT), etc. in the inference process of the LLM.

The weight is a part of model parameters of the LLM. These model parameters are determined after LLM training is completed. In other words, in the inference process of the LLM, the weight occupies a fixed quantity of video memory resources. Therefore, for a service device deployed with an LLM, a video memory resource that needs to be occupied by a weight of the deployed LLM can be calculated in advance, and accordingly, a physical video memory resource on the service device is accurately allocated. Then, a remaining physical video memory resource needs to be properly allocated and scheduled between a KV cache and an ACT.

In a related technology, a case in which a physical video memory resource of the KV cache or the ACT is insufficient may occur, thereby affecting smooth execution of a current inference task and a subsequent inference task performed by the LLM, for example, increasing a first token latency or reducing throughput performance.

For the disadvantage in the related technology, this specification provides a video memory management solution for large language model inference, which is described in detail below with reference to the accompanying drawings.

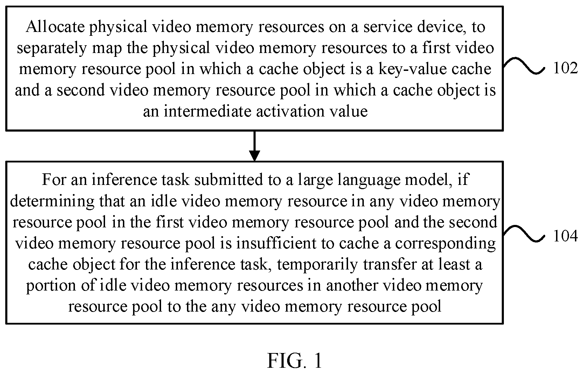

FIG. 1 is a flowchart illustrating a video memory management method for large language model inference, according to some example embodiments. As shown in FIG. 1, the method is applied to a service device deployed with a large language model. The method includes the following:
Step 102: Allocate physical video memory resources on the service device, to separately map the physical video memory resources to a first video memory resource pool in which a cache object is a key-value cache and a second video memory resource pool in which a cache object is an intermediate activation value.

The technical solution of this specification is applicable to all types of LLMs in a related technology. In other words, this is not limited in this specification.

For example, from the perspective of the field, the LLM in this specification can be a large model in the general field, or can be a large model in the vertical field. This is not limited in this specification. The large model in the general field is a general large model that is trained by extensively collecting data samples in a plurality of fields and that can process inference tasks in a plurality of fields. The large model in the vertical field is a large model that is trained by continuing to fine-tune the large model in the general field based on a data sample in a specific target field and the large model in the general field and that can process an inference task in the target field.

For another example, from the perspective of the modality, the LLM in this specification can be a conventional text inference model used for a natural language task, and a prompt applicable to the LLM can be specifically text data. Certainly, the LLM in this specification can alternatively be a multi-modal LLM, and a prompt applicable to the LLM can include one or more types of data such as a text, an audio, a picture, and a video.

As described above, in an inference scenario of the LLM, cache objects that need to occupy physical video memory resources can include a weight, a KV cache, an ACT, etc. A physical video memory resource needed by the weight can be preferentially allocated to the weight, and remaining physical video memory resources can be allocated to the first video memory resource pool and the second video memory resource pool by using the technical solution of this specification, to respectively cache the KV cache and the ACT. Certainly, if the physical video memory resource for the weight is independent of the physical video memory resources for the KV cache and the ACT on the service device, allocation and scheduling of the physical video memory resources for the KV cache and the ACT can be directly performed without considering the weight.

An operation of allocating the physical video memory resources to the first video memory resource pool and the second video memory resource pool can be an initialized allocation operation performed after the LLM is deployed on the service device, and adjustment is performed on this basis in a subsequent inference process. Certainly, if there is a related need in the inference process, for example, the solution for initialized allocation is found inappropriate in the inference process, for example, causes excessively frequent dynamic scheduling, reallocation can be performed theoretically. This is not limited in this specification.

The physical video memory resource on the service device can include a GPU video memory. Certainly, if the service device uses another type of chip to perform LLM inference, the physical video memory resource can alternatively be from the another type of chip.

The GPU is used as an example. One or more graphics cards can be installed on the service device. If there is only one graphics card, the physical video memory resources allocated to the first video memory resource pool and the second video memory resource pool are from a video memory on the graphics card. If a plurality of graphics cards are included, in one case, each graphics card can be separately managed, that is, a video memory on each graphics card is allocated as a separate physical video memory resource, and each physical video memory resource has a corresponding first video memory resource pool and second video memory resource pool. Therefore, in this scenario, transfer of a video memory resource between the first video memory resource pool and the second video memory resource pool is not across graphics cards. In another case, video memories of the plurality of graphics cards can be allocated as a unified physical video memory resource. In this case, physical video memory resources allocated to the first video memory resource pool may be from one or more graphics cards, and the second video memory resource pool is similar. Therefore, in this scenario, transfer of a video memory resource between the first video memory resource pool and the second video memory resource pool may be across graphics cards. For example, a physical video memory resource originally used by the first video memory resource pool is from graphics card ①, and a physical video memory resource transferred to the second video memory resource pool is from graphics card ②.

In a case in which a plurality of graphics cards exist simultaneously, each graphics card can be used as one worker, and a shard of an LLM instance is formed on each worker, to implement parallel processing on an inference task. In a parallel processing process, the video memory management solution in this specification is orthogonal to various parallelism policies in a related technology. Therefore, regardless of a parallelism policy used for an LLM instance, the video memory management solution in this specification can be used in combination. For example, the parallelism policy can include tensor parallelism (TP), pipeline parallelism (PP), expert parallelism (EP), etc. This is not limited in this specification.

For a physical video memory resource allocation operation, a processing manner in a related technology can be used. This is not limited in this specification. Using the first video memory resource pool as an example, page table T1 corresponding to the first video memory resource pool can be established, and a mapping relationship between a logical video memory address of the first video memory resource pool and a physical video memory address of an allocated physical video memory resource is recorded in page table T1. Similarly, corresponding page table T2 can exist for the second video memory resource pool, and is used to record a mapping relationship between a logical video memory address of the second video memory resource pool and a physical video memory address of an allocated physical video memory resource.

Proportions or quantities of physical video memory resources actually allocated to the first video memory resource pool and the second video memory resource pool respectively are related to an allocation policy actually used. This is not limited in this specification.

For example, it is usually difficult to estimate a quantity of tokens included in an output generated by the LLM for a prompt, and a quantity of video memory resources occupied by the KV cache in a decode phase increases with the quantity of tokens. Therefore, it is usually difficult to accurately calculate a quantity of physical video memory resources needed by the KV cache. Therefore, a quantity of physical video memory resources needed by the ACT can be first estimated, a corresponding physical video memory resource is allocated to the second video memory resource pool, and then a remaining physical video memory resource is allocated to the first video memory resource pool.

For any inference task, a quantity of video memory resources occupied by an ACT in a prefill phase is positively correlated with a prompt length of the inference task. For example, when the prompt length is 1K, the quantity of video memory resources occupied by the ACT in the prefill phase is 2G; or when the prompt length is 8K, the quantity of video memory resources occupied by the ACT in the prefill phase is 16G. In addition, a quantity of video memory resources occupied by the ACT in a decode phase is a size of space occupied by an output token (which is specifically a previous output token), and a specific value is related to an embedding dimension (Embedding Dimension), a data type (such as a 32-bit floating point number float32, a 16-bit floating point number float16, or an integer int8), etc. actually used for the output token.

It can be learned that if prompt lengths are different, ACTs generated in different inference tasks occupy different quantities of video memory resources in the prefill phase. However, it can be determined that for a determined LLM, because a maximum prompt length is set in the LLM, that is, a maximum length of a prompt in each inference task is limited, a quantity of video memory resources occupied in a prefill phase by an ACT generated in the inference task does not exceed a video memory resource occupation quantity corresponding to the maximum prompt length. Therefore, a maximum prompt length specified in the large language model deployed on the above-mentioned service device can be determined, and then the maximum prompt length is used as an assumed prompt length (that is, it is assumed that a length of a prompt of each inference task received by the LLM in the inference process is the maximum prompt length) to allocate a matched physical video memory resource to the second video memory resource pool.

Specifically, for example, for a certain determined LLM, in a case that a length of a prompt is the above-mentioned maximum prompt length, a corresponding video memory resource occupation quantity is Z. In this case, assuming that a pre-specified quantity of inference tasks included in each batch during batching is n, a quantity of video memory resources allocated to the second video memory resource pool can be not less than n*Z, so that the second video memory resource pool can simultaneously provide, for at least n inference tasks, a video memory resource for caching an ACT.

Certainly, in an actual inference process, the prompt of the inference task usually does not really reach the maximum prompt length, and even differs greatly from the maximum prompt length. For each batch, a waste of a video memory resource in the second video memory resource pool may be caused. Therefore, the assumed prompt length can be set to an actual length that is less than the above-mentioned maximum prompt length (that is, it is assumed that a length of a prompt of each inference task received by the LLM in the inference process is the actual length), to allocate a matched physical video memory resource to the second video memory resource pool and allocate a remaining physical video memory resource to the first video memory resource pool.

For example, the above-mentioned actual length is collected based on data of a historical inference task, and prompt lengths of at least a predetermined proportion of historical inference tasks are not greater than the actual length. For example, it is assumed that the preset proportion is 90%, and it is found, through statistical analysis on a historical inference task, that although the maximum prompt length of the LLM is 4K, prompt lengths of at least 90% of historical inference tasks are not greater than 1K. In this case, the above-mentioned actual length can be set to 1K. In other words, each of quantities of video memory resources occupied by ACTs generated in these historical inference tasks in a prefill phase does not exceed 2G, and is far less than 8G that needs to be occupied by a prompt whose length is 4K. Therefore, the quantity Z of video memory resources occupied by an ACT generated in each inference task in the prefill phase can be set to 2G. If it is specified that the quantity n of inference tasks in the batch is equal to 5, a resource quantity of physical video memory resources allocated to the second video memory resource pool is 5*2G=10G, which is far less than 5*8G=40G. In the actual inference process, even if there are a small quantity of inference tasks whose prompt lengths exceed 1K in the batch, because prompt lengths of most inference tasks are not greater than 1K, an overall quantity of video memory resources occupied by ACTs usually does not exceed a quantity of video memory resources in the second video memory resource pool. Certainly, if there is a case in which an idle video memory resource in the second video memory resource pool is insufficient, an idle video memory resource needed by the second video memory resource pool can be transferred from the first video memory resource pool by using the technical solution of this specification. This is described in detail below.

If it is considered that a video memory resource can be transferred at any time in the inference process by using the technical solution of this specification, in the above-mentioned example in which the quantity Z of video memory resources occupied by the ACT is set to 2G, regardless of a size of the batch in the actual inference process, it can be considered by default that the size of the batch is 1. Therefore, a resource quantity of physical video memory resources allocated to the second video memory resource pool initially can be 2G, and subsequently, transfer from the first video memory resource pool can be performed at any time according to an actual situation. Certainly, as described above, if the resource quantity of physical video memory resources allocated to the second video memory resource pool initially is determined based on an actual size (such as 5 enumerated above) of the batch, occurrence of a transfer operation can be minimized, to avoid brought additional overheads.

Certainly, the above-mentioned actual length can alternatively be set in another manner, and is not necessarily collected based on the data of the historical inference task. For example, the actual length can be set to an empirical value, or even can be set to any value. Actually, as described above, even if a set actual length is relatively small, and consequently the quantity of physical video memory resources allocated to the second video memory resource pool is relatively small, if a case in which the idle video memory resource in the second video memory resource pool is insufficient is indeed encountered, a video memory resource can be temporarily transferred by using the technical solution of this specification, to satisfy a need of an ACT for the video memory resource.

Step 104: For an inference task submitted to the large language model, if determining that an idle video memory resource in any video memory resource pool in the first video memory resource pool and the second video memory resource pool is insufficient to cache a corresponding cache object for the inference task, temporarily transfer at least a portion of idle video memory resources in another video memory resource pool to the any video memory resource pool.

In a process of executing the inference task by using the LLM, if a KV cache is generated, a video memory resource in the first video memory resource pool is used for caching; or if an ACT is generated, a video memory resource in the second video memory resource pool is used for caching. When video memory resources in both the first video memory resource pool and the second video memory resource pool are sufficient, cache operations on the KV cache and the ACT are mutually independent and do not interfere with each other. Based on this, unified management is further performed on the first video memory resource pool and the second video memory resource pool in this specification, to implement temporary transfer of an idle video memory resource between the two video memory resource pools, so as to satisfy a cache need of the inference task.

Regardless of the prefill phase or the decode phase, there may be a need for performing temporary scheduling on an idle video memory resource. The following separately lists cases in which there may be needs in the two phases. However, this is not limited in this specification.

First, the prefill phase is used as an example.

After the inference task is received, video memory resource demand of a KV cache and an ACT of the inference task in the prefill phase can be separately calculated. If a quantity of idle video memory resources in any video memory resource pool in the first video memory resource pool and the second video memory resource pool is less than calculated video memory resource demand corresponding to a corresponding cache object, it is determined that the idle video memory resource in the any video memory resource pool is insufficient to cache the corresponding cache object for the inference task, and an idle video memory resource can be temporarily transferred by using the technical solution of this specification. If a quantity of idle video memory resources in each of the first video memory resource pool and the second video memory resource pool can be not less than the calculated video memory resource demand corresponding to the corresponding cache object after the transfer, or a quantity of idle video memory resources in each of the first video memory resource pool and the second video memory resource pool can be not less than the calculated video memory resource demand corresponding to the corresponding cache object without performing transfer, the corresponding inference task can be advanced to the prefill phase.

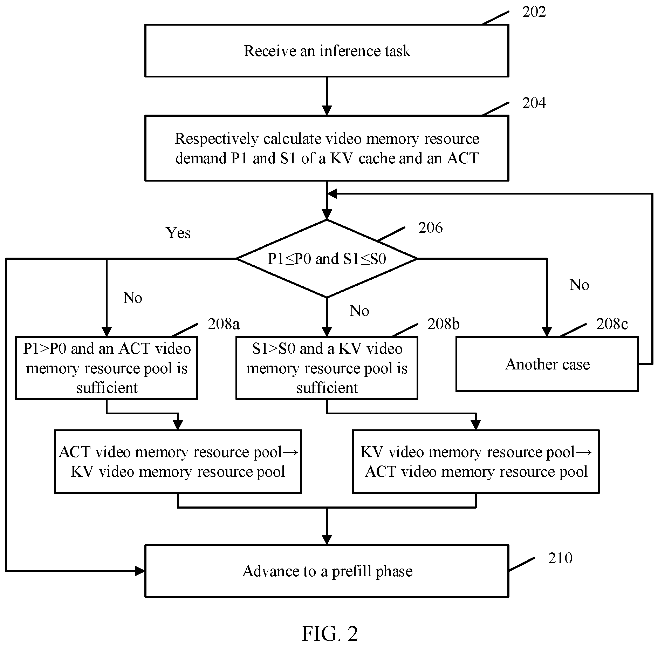

For example, FIG. 2 is a flowchart illustrating video memory scheduling performed in a prefill phase, according to some example embodiments. As shown in FIG. 2, the video memory scheduling in the prefill phase can include the following steps:
In step 202, an inference task is received.

Here, processing logic of video memory scheduling is described by using any inference task as an example.

In step 204, video memory resource demand P1 and S1 of a KV cache and an ACT are respectively calculated.

As described above, based on a prompt in the received inference task, which specifically refers to an actual length of the prompt, and with reference to an attribute such as a data type set by an LLM, respective video memory resource demand of a KV cache and an ACT corresponding to the prompt in the prefill phase, that is, quantities of video memory resources that need to be occupied by the KV cache and the ACT respectively, can be calculated. It is assumed that the video memory resource demand of the KV cache is P1, and the video memory resource demand of the ACT is S 1.

In step 206, whether P1≤P0 and S1≤S0 are satisfied is determined.

As described above, a first video memory resource pool for caching the KV cache and a second video memory resource pool for caching the ACT can be separately created. Here, the first video memory resource pool is referred to as a KV video memory resource pool, and the second video memory resource pool is referred to as an ACT video memory resource pool. Through continuous management on the KV video memory resource pool and the ACT video memory resource pool, resource quantities of respective idle video memory resources of the two video memory resource pools can be separately determined. The idle video memory resource is a video memory resource that is not occupied in a corresponding video memory resource pool, or a video memory resource that is marked as idle in a corresponding video memory resource pool. It is assumed that a resource quantity of idle video memory resources in the KV video memory resource pool is P0, and a resource quantity of idle video memory resources in the ACT video memory resource pool is S0.

If P1≤P0 is satisfied, it indicates that the idle video memory resources in the KV video memory resource pool are sufficient to cache the KV cache generated in the current inference task in the prefill phase. Similarly, if S1≤S0 is satisfied, it indicates that the idle video memory resources in the ACT video memory resource pool are sufficient to cache the ACT generated in the current inference task in the prefill phase. Then, if both P1≤P0 and S1≤S0 are satisfied, step 210 can be directly skipped to, that is, the current inference task is advanced to the prefill phase for processing.

If P1>P0, it indicates that the idle video memory resources in the KV video memory resource pool are insufficient to cache the KV cache generated by the current inference task in the prefill phase. In this case, the current inference task is not advanced to the prefill phase. Similarly, if S1>S0, it indicates that the idle video memory resources in the ACT video memory resource pool are insufficient to cache the ACT generated in the current inference task in the prefill phase. In this case, the current inference task is not advanced to the prefill phase either.

In step 208a, if P1>P0 and the ACT video memory resource pool is sufficient, an idle video memory resource is temporarily transferred from the ACT video memory resource pool to the KV video memory resource pool.

As described above, P1>P0 indicates that the idle video memory resources in the KV video memory resource pool are insufficient. In this case, if the idle video memory resources in the ACT video memory resource pool are sufficient to cache the ACT, and are sufficient for transfer to the KV video memory resource pool, it indicates that the ACT video memory resource pool is sufficient. For example, it is assumed that P1=4G, that is, the KV cache of the inference task in the prefill phase needs to occupy video memory resources of 4G. If P0=3G, that is, the idle video memory resources in the KV video memory resource pool are 3G, it is insufficient to cache the KV cache of 4G, and there is still a lack of video memory resources of 1G. In this case, whether the idle video memory resources in the ACT video memory resource pool are sufficient needs to be determined. It is assumed that S0=5G, that is, the idle video memory resources in the ACT video memory resource pool are 5G. If S1=2G, that is, the ACT of the inference task in the prefill phase needs to occupy video memory resources of 2G, it can be determined that S0-S1=3G>1G, which indicates that in addition to caching the ACT, the ACT video memory resource pool can further have sufficient idle video memory resources for transfer to the KV video memory resource pool to cache the KV cache. Therefore, it is determined that the ACT video memory resource pool is sufficient. If S0=2.5G, although the idle video memory resources in the ACT video memory resource pool are sufficient to cache the ACT, the remaining 0.5G idle video memory resources are insufficient to fill the above-mentioned 1G video memory resources needed by the KV cache. Therefore, in this case, it is determined that the ACT video memory resource pool is insufficient. If S0<2G, the ACT video memory resource pool even cannot cache the ACT. Similarly, it should be determined that the ACT video memory resource pool is insufficient.

If it is determined that the ACT video memory resource pool is sufficient, a portion of idle video memory resources in the ACT video memory resource pool can be temporarily transferred to the KV video memory resource pool. A resource quantity of transferred video memory resources depends on a difference between the quantity of idle video memory resources in the KV video memory resource pool and the video memory resource demand of the KV cache of the inference task in the prefill phase. For example, in the above-mentioned example, P1=4G, P0=3G, and it can be determined that the difference is P1-P0=1G. Therefore, idle video memory resources of 1G can be temporarily transferred from the ACT video memory resource pool to the KV video memory resource pool.

In step 208b, if S1>S0 and the KV video memory resource pool is sufficient, an idle video memory resource is temporarily transferred from the KV video memory resource pool to the ACT video memory resource pool.

As described above, S1>S0 indicates that the idle video memory resources in the ACT video memory resource pool are insufficient. In this case, if the idle video memory resources in the KV video memory resource pool are sufficient to cache the KV cache, and are sufficient for transfer to the ACT video memory resource pool, it indicates that the KV video memory resource pool is sufficient. For example, it is assumed that S1=8G, that is, the ACT of the inference task in the prefill phase needs to occupy video memory resources of 8G. If S0=5G, that is, the idle video memory resources in the ACT video memory resource pool are 5G, it is insufficient to cache the ACT of 8G, and there is still a lack of video memory resources of 3G. In this case, whether the idle video memory resources in the KV video memory resource pool are sufficient needs to be determined. It is assumed that P0=15G, that is, the idle video memory resources in the KV video memory resource pool are 15G. If P1=10G, that is, the KV cache of the inference task in the prefill phase needs to occupy video memory resources of 10G, it can be determined that P0-P1=5G>3G, which indicates that in addition to caching the KV cache, the KV video memory resource pool can further have sufficient idle video memory resources for transfer to the ACT video memory resource pool to cache the ACT. Therefore, it is determined that the KV video memory resource pool is sufficient. If P0=12G, although the idle video memory resources in the KV video memory resource pool are sufficient to cache the KV cache, the remaining 2G idle video memory resources are insufficient to fill the above-mentioned 3G video memory resources needed by the ACT. Therefore, in this case, it is determined that the KV video memory resource pool is insufficient. If P0<10G, the KV video memory resource pool even cannot cache the KV cache. Similarly, it should be determined that the KV video memory resource pool is insufficient.

If it is determined that the KV video memory resource pool is sufficient, a portion of idle video memory resources in the KV video memory resource pool can be temporarily transferred to the ACT video memory resource pool. A resource quantity of transferred video memory resources depends on a difference between the quantity of idle video memory resources in the ACT video memory resource pool and the video memory resource demand of the ACT of the inference task in the prefill phase. For example, in the above-mentioned example, S1=8G, S0=5G, and it can be determined that the difference is S1-S0=3G. Therefore, idle video memory resources of 3G can be temporarily transferred from the KV video memory resource pool to the ACT video memory resource pool.

In step 208c, in another case, the inference task needs to be in a waiting state and cannot be advanced to the prefill phase by scheduling a video memory resource.

The another case can include the following:
P1>P0 and S1>S0, that is, the idle video memory resources in the KV video memory resource pool are insufficient to cache the KV cache, and the idle video memory resources in the ACT video memory resource pool are insufficient to cache the ACT.
P1>P0 and S1<S0, but the ACT video memory resource pool is insufficient. For this, descriptions of related examples are provided above, and details are omitted here for simplicity.
S1>S0 and P1<P0, but the KV video memory resource pool is insufficient. For this, descriptions of related examples are provided above, and details are omitted here for simplicity.

In step 210, the inference task is advanced to the prefill phase.

In a batching scenario, a plurality of inference tasks in a same batch can be simultaneously advanced to the prefill phase. After processing in the prefill phase has been completed for each inference task in the batch, each inference task enters a subsequent decode phase.

By analyzing video memory resource occupation of the KV cache and ACT in the prefill phase and the decode phase, the following features can be found:

The KV cache needs to occupy a relatively large quantity of video memory resources in the prefill phase. When an auto-regression step is performed in the decode phase, a stored KV cache needs to be accessed and updated. Therefore, not only the KV cache generated in the prefill phase still occupies original video memory resources after the decode phase is entered, but also more video memory resources are gradually occupied with each time of execution of the auto-regression step. For example, the KV cache occupies video memory resources of 4G in the prefill phase, and the video memory resources are further gradually increased to 8G in the decode phase.

The ACT needs to occupy a relatively large quantity of video memory resources in the prefill phase, but in the decode phase, only a previous output token needs to be stored. For example, the ACT occupies video memory resources of 2G in the prefill phase, and needs to occupy storage space of only one output token in the decode phase.

It can be learned that for the ACT, if an idle video memory resource in the first video memory resource pool is temporarily transferred to the second video memory resource pool for the inference task before the prefill phase, the transferred video memory resource is returned from the second video memory resource pool to the first video memory resource pool after the prefill phase ends, so that the video memory resource can be used to cache the KV cache in the decode phase, or used to cache a KV cache of another inference task in the prefill phase.

A temporary scheduling need for an idle video memory resource and a corresponding video memory scheduling process in the prefill phase are listed above. The following describes the decode phase.

As described above, in a process in which the inference task is in the decode phase, as output tokens are continuously generated, a video memory resource occupation quantity of the KV cache increases accordingly. Therefore, a video memory resource consumption status of the first video memory resource pool can be determined in real time. If the video memory resource in the first video memory resource pool has been depleted or a proportion of an idle video memory resource is less than a warning proportion, it is determined that the idle video memory resource in the first video memory resource pool is insufficient to cache the corresponding cache object for the inference task, and an idle video memory resource can be temporarily transferred by using the technical solution of this specification.

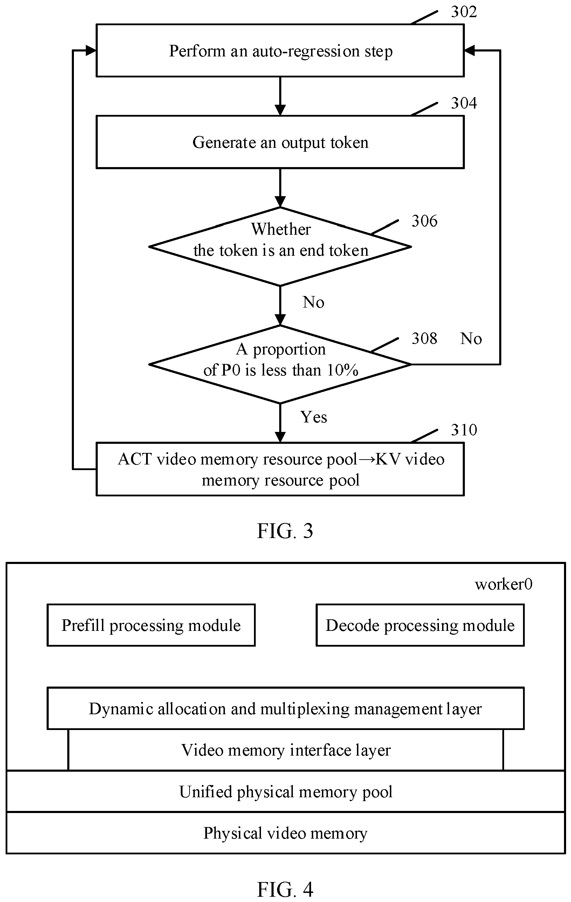

For example, FIG. 3 is a flowchart illustrating video memory scheduling performed in a decode phase, according to some example embodiments. As shown in FIG. 3, the video memory scheduling in the decode phase can include the following steps:

In step 302, an auto-regression step is performed.

As described above, when the auto-regression step is performed, an LLM uses a previous output token and a cached KV cache as inputs to generate a next output token and an updated KV cache.

In step 304, an output token is generated.

The output token here is a so-called "next output token" generated in a current round of auto-regression step.

In step 306, whether the token is an end token is determined.

An output generated by the LLM includes one or more output tokens. When an output token generated in a certain round of auto-regression step is the end token, the LLM determines that a complete output has been generated, and does not repeat the auto-regression step. In conclusion, the end token indicates the end of the output, and may have different names in different LLMs. This is not limited in this specification.

If the output token generated in the current round of auto-regression step is not the end token, step 308 is performed.

In step 308, whether a proportion of P0 is less than 10% is determined. If yes, step 310 is performed; otherwise, step 302 is performed again.

As described above, when the proportion of the idle video memory resource in the first video memory resource pool is less than the warning proportion, transfer from the second video memory resource pool can be performed. 10% here is an example warning proportion, so that when the proportion of the resource quantity P0 of idle video memory resources in the KV video memory resource pool is less than 10%, but the resources are not depleted, an idle video memory resource is temporarily transferred from the ACT video memory resource pool in advance. Therefore, for the inference task, the KV video memory resource pool can always provide sufficient idle video memory resources, and there is no need to temporarily wait for temporary transfer of an idle video memory resource from the ACT video memory resource pool to the KV video memory resource pool. Therefore, generation of a token is not delayed, and efficient execution of the inference task is ensured. A value of the warning proportion is not limited in this specification. For example, the value can be adjusted based on a quantity of parallelly processed inference tasks. A larger quantity of parallelly processed inference tasks means a higher overall consumption speed of the video memory resource, and therefore, the value of the warning proportion can be relatively increased, so that a sufficient time can be reserved for completing a temporary transfer operation in a timely manner.

Certainly, even if the idle video memory resource is temporarily transferred from the ACT video memory resource pool to the KV video memory resource pool after the idle video memory resources in the KV video memory resource pool are depleted, compared with a solution in which temporary transfer is not used but an occupied video memory resource is released after another inference task is completed, the processing solution using temporary transfer can significantly shorten waiting duration of the inference task, so that an execution speed of the inference task is improved.

In step 310, at least a portion of idle video memory resources in the ACT video memory resource pool are temporarily transferred to the KV video memory resource pool.

Similar to the embodiment shown in FIG. 2, if an idle video memory resource needs to be temporarily transferred from the ACT video memory resource pool, it should be ensured that the idle video memory resources in the ACT video memory resource pool are sufficient to satisfy a cache need of the ACT, and are sufficient for transfer to the KV video memory resource pool. As described above, in a process in which the LLM processes the inference task, video memory resource demand of the ACT in the decode phase decreases sharply. Therefore, after processing on the inference task in the prefill phase is completed, most video memory resources occupied by the inference task in the ACT video memory resource pool can become idle, and can be temporarily transferred to the KV video memory resource pool, to cache the KV cache, thereby improving utilization of the video memory resources and improving processing efficiency of the inference task.

Because a quantity of tokens included in an output generated by the LLM for a prompt cannot be accurately estimated, when the idle video memory resources in the KV video memory resource pool are depleted or nearly depleted in the decode phase, it cannot be determined how many output tokens are still generated subsequently. Therefore, a resource quantity of idle video memory resources transferred from the ACT video memory resource pool to the KV video memory resource pool needs to be determined by using a specific borrowing policy.

For example, a fixed borrowing quantity can be predefined, so that a corresponding idle video memory resource is temporarily transferred from the ACT video memory resource pool each time based on the borrowing quantity. This specification does not limit a specific value of the borrowing quantity. For example, the borrowing quantity can be an empirical value defined according to an actual situation.

For another example, based on a service scenario to which the inference task belongs, a video memory resource occupation quantity of the KV cache that is collected based on data of a historical inference task in the service scenario can be determined. Then, a difference between a quantity of idle video memory resources in the KV video memory resource pool and the calculated video memory resource occupation quantity is calculated, and an idle video memory resource corresponding to the difference in the ACT video memory resource pool is temporarily transferred to the KV video memory resource pool.

In a same service scenario, a problem raised by a user tends to have a specific rule, and content of a corresponding answer often falls within a specific length range. Therefore, by collecting data of a historical inference task in the service scenario, the video memory resource occupation quantity of the KV cache can be estimated to a specific extent. A method and a granularity for classifying service scenarios are not limited in this specification. For example, corresponding service scenarios can be classified based on dimensions such as education, life, sentiment, science and technology, and literature.

Certainly, the above-mentioned service scenario-based estimation necessarily has a deviation. If the estimated occupation quantity is larger, more idle video memory resources are transferred from the ACT video memory resource pool to the KV video memory resource pool, and extra idle video memory resources are actually wasted in the KV video memory resource pool. If the estimated occupation quantity is smaller, only transfer needs to be performed again. Although specific overheads are added, this helps improve utilization of the video memory resource.

For example, for first-time borrowing for the inference task in the decode phase, the idle video memory resource corresponding to the difference in the ACT video memory resource pool can be temporarily transferred to the KV video memory resource pool based on the difference estimated and calculated in the above-mentioned service scenario. For non-first-time borrowing for the inference task in the decode phase, it indicates that, regardless of a method previously used for estimation, a quantity of transferred idle video memory resources is small, and an idle video memory resource needs to be temporarily transferred from the ACT video memory resource pool to the KV video memory resource pool again or more times. As a quantity of borrowing times increases, a quantity of output tokens generated by the LLM for the inference task is also increasing, and an output end is closer. It can be learned that in a case of non-first-time borrowing, although transfer can still be performed based on the borrowing quantity used for first-time borrowing, as a quantity of borrowing times increases, a probability that a borrowed idle video memory resource is wasted (output ends before the resource is used up) continuously increases. Therefore, to reduce a waste of the video memory resource, in the case of non-first-time borrowing, when an idle video memory resource in the ACT video memory resource pool is temporarily transferred to the KV video memory resource pool, a borrowing quantity of the idle video memory resource can be successively reduced. As such, even if a waste occurs, fewer video memory resources are wasted. As a reference, for example, in the case of non-first-time borrowing, each borrowing resource quantity can be 50% of a previous borrowing resource quantity. If the first borrowing resource quantity is X, the second borrowing resource quantity is 0.5X, the third borrowing resource quantity is 0.25X, and so on.

As described above, if an idle video memory resource in the first video memory resource pool is temporarily transferred to the second video memory resource pool for the inference task in the prefill phase, the transferred video memory resource can be returned from the second video memory resource pool to the first video memory resource pool after the prefill phase ends. The KV cache still needs to be accessed and updated in the decode phase. Therefore, if an idle video memory resource in the second video memory resource pool is temporarily transferred to the first video memory resource pool for the inference task, the transferred video memory resource can be returned from the first video memory resource pool to the second video memory resource pool after the decode phase of the inference task ends.

Temporary transfer and return for the idle video memory resource can be implemented by managing a page table of a corresponding video memory resource pool. For example, when at least a portion of idle video memory resources in another video memory resource pool are temporarily transferred to any video memory resource pool, a mapping relationship between at least a portion of logical video memory addresses and allocated physical video memory addresses that is recorded in a page table of the another video memory resource pool can be released, and remapping to a page table of the any video memory resource pool can be performed.

For example, it is assumed that corresponding page table T1 exists for the first video memory resource pool, and records a mapping relationship between logical video memory addresses AL1 to ALm and physical video memory addresses A1 to Am, and corresponding page table T2 exists for the second video memory resource pool, and records a mapping relationship between logical video memory addresses BL1 to BLk and physical video memory addresses B1 to Bk. If idle video memory resources corresponding to physical video memory addresses Aa to Ai need to be temporarily transferred from the first video memory resource pool to the second video memory resource pool, a mapping relationship between physical video memory addresses Aa to Ai and logical video memory addresses ALa to ALi can be released in page table T1, and a mapping relationship between physical video memory addresses Aa to Ai and logical video memory addresses BL(k+a) to BL(k+i) can be recorded in page table T2.

Similarly, if an idle video memory resource transferred to any video memory resource pool needs to be returned to another video memory resource pool, a mapping relationship between a corresponding logical video memory address and a physical video memory address that is recorded in a page table of the any video memory resource pool can be released, and remapping to a page table of the another video memory resource pool can be performed. Following the above-mentioned example, the mapping relationship between physical video memory addresses Aa to Ai and logical video memory addresses BL(k+a) to BL(k+i) can be released in page table T2, and the mapping relationship between physical video memory addresses Aa to Ai and logical video memory addresses ALa to ALi can be recorded in page table T 1.

FIG. 4 is a schematic diagram illustrating an architecture of a scheduling management system for a video memory resource, according to some example embodiments. As shown in FIG. 4, any worker0 of an LLM on a service device is used as an example. worker0 can be specifically deployed on a certain graphics card on the service device.

In terms of physical hardware, a physical video memory on the graphics card on which worker0 is located is related.

In terms of software logic, the scheduling management system relates to a unified physical memory pool established for the above-mentioned physical video memory, and the unified physical memory pool is used to maintain a physical video memory resource in the above-mentioned physical video memory. A video memory interface layer can provide interfaces for allocating, releasing, and borrowing the physical video memory resource, so that a dynamic allocation and multiplexing management layer can schedule and manage, through the video memory interface layer, the physical video memory resource maintained in the unified physical memory pool. In addition, a prefill processing module is configured to perform processing in a prefill phase on an inference task, and a decode processing module is configured to perform processing in a decode phase on the inference task.

The dynamic allocation and multiplexing management layer is a core of the above-mentioned scheduling management system, and implements scheduling and management on a video memory resource by using predefined policies. Examples are as follows:

### (1) Dynamic mapping management policy

As described above, a page table corresponding to each of the first video memory resource pool and the second video memory resource pool is maintained, that is, remapping is performed for a mapping relationship between a logical video memory address and a physical video memory address, so that a physical video memory resource can be dynamically mapped to the first video memory resource pool or the second video memory resource pool without changing a virtual pointer (that is, a logical video memory address). As such, not only scheduling flexibility of the video memory resource can be improved, but also the entire process is not related to reallocation of the physical video memory resource, so that consumption caused by video memory scheduling can be reduced.

Certainly, as a theoretically feasible technical solution, even if the physical video memory resource is released and reallocated, processing efficiency of an inference task can still be improved as long as the physical video memory resource can be transferred. This specification does not exclude the technical solution.

### (2) Cache policy

The cache policy describes how to cache a KV cache and an ACT. Specifically, as described above, an independent video memory resource pool can be established for each of the KV cache and the ACT, that is, the above-mentioned first video memory resource pool and second video memory resource pool, to separately cache the KV cache and the ACT.

The cache policy can further relate to how to initialize and allocate a physical video memory resource to the first video memory resource pool and the second video memory resource pool. This is described in detail above, and details are omitted here for simplicity.

### (3) Asynchronous policy

As described above, when the KV cache is cached in the decode phase, because an overall quantity of video memory resources occupied by the KV cache continuously increases and cannot be accurately estimated, a case in which an idle video memory resource in the first video memory resource pool is insufficient is likely to occur. Therefore, the technical solution of this specification can temporarily transfer an idle video memory resource in the second video memory resource pool to the first video memory resource pool.

The asynchronous policy describes a process of transferring an idle video memory resource. Specifically, the above-mentioned warning proportion is set, so that in a case in which a proportion of the idle video memory resource in the first video memory resource pool is less than the predetermined proportion, the above-mentioned temporary transfer operation can be performed in advance. As such, the service device asynchronously performs the following: ① generating an output token for an inference task; and ② temporarily transfer an idle video memory resource from the second video memory resource pool to the first video memory resource pool. As such, time overheads caused by a transfer operation on a video memory resource can be hidden in a calculation process for an output token. In this case, as long as sufficient idle video memory resources are maintained in the first video memory resource pool, output tokens can be continuously generated, instead of stopping generation of the output token because the idle video memory resources in the first video memory resource pool are depleted and waiting for the service device to schedule an idle video memory resource to the first video memory resource pool through temporary transfer or in another way. This helps speed up processing of the inference task.

### (4) Pre-borrowing policy

The pre-borrowing policy is associated with the above-mentioned asynchronous policy. A related description of the pre-borrowing policy is actually covered in the above-mentioned description for the asynchronous policy. A core is as follows: In the decode phase, before the idle video memory resources in the first video memory resource pool are depleted, a specific idle video memory resource is transferred in advance from the second video memory resource pool, to ensure that output tokens are continuously generated for the inference task.

### (5) Borrowing policy

The borrowing policy describes how many video memory resources are transferred each time an idle video memory resource is temporarily transferred. As described above, before the prefill phase, quantities of video memory resources occupied by the KV cache and the ACT in the prefill phase can be accurately calculated for the prompt of the inference task. Therefore, how many video memory resources need to be transferred can be accurately calculated accordingly. In addition, in the decode phase, in a case in which the idle video memory resource in the first video memory resource pool is insufficient, a resource quantity can be set based on experience and transfer is performed based on the resource quantity each time, or a quantity of video memory resources occupied by the KV cache can be estimated based on a service scenario and data of a history inference task and a quantity of video memory resources that need to be transferred is determined based on the quantity, and a transfer quantity can be further successively reduced when transfer is performed a plurality of time. Details are omitted here for simplicity.

In fact, in a scenario in which the LLM processes an inference task, the service device usually receives a large quantity of inference tasks, and these inference tasks are added to a task queue. The service device can learn of lengths of prompts included in these inference tasks, and accordingly calculate quantities of video memory resources occupied by a KV cache and an ACT of each inference task in the prefill phase, so as to temporarily transfer an idle video memory resource between the first video memory resource pool and the second video memory resource pool as needed in the method shown in FIG. 2 with reference to sensed resource quantities of idle video memory resources in the first video memory resource pool and the second video memory resource pool. In addition, the service device can further perform proper scheduling on the inference tasks in the task queue, for example, properly adjust an execution sequence between the inference tasks, or combine inference tasks suitable for simultaneous processing into a same batch.

It can be learned from the above-mentioned embodiments that, in this specification, the corresponding first video memory resource pool and second video memory resource pool are respectively created for the key-value cache and the intermediate activation value, so that mutual interference between the key-value cache and the intermediate activation value can be avoided when video memory resources are sufficient. In addition, the first video memory resource pool and the second video memory resource pool are managed uniformly. In this specification, dynamic scheduling and elastic management can be performed on the idle video memory resource based on an actual need, so that the key-value cache can temporarily borrow a video memory resource originally allocated to the second video memory resource pool for the intermediate activation value to use, and the intermediate activation value can also temporarily borrow a video memory resource originally allocated to the first video memory resource pool for the key-value cache to use. This greatly improves scheduling flexibility and utilization of the video memory resource, thereby helping shorten an inference time of the LLM and improve throughput performance of the LLM in a case of fixed infrastructure costs.

Proper scheduling is performed on a video memory resource before the prefill phase, so that in a case in which a video memory resource in one of the first video memory resource pool and the second video memory resource pool is insufficient, more inference tasks can enter the prefill phase as soon as possible through temporary transfer while waiting duration is not needed or is reduced. As such, the first output token is generated and returned more quickly, thereby significantly reducing a first token latency of the inference task. This also enables the service device to process more inference tasks at the same time on a premise of a fixed video memory resource, so that a capacity of the batch can be increased, and a larger throughput can be implemented.

Through proper scheduling on a video memory resource in the decode phase, smooth processing of the inference task can be ensured, waiting caused due to insufficient video memory resources or even a task failure caused by long-time waiting can be reduced or avoided, and processing duration in the decode phase can be shortened, thereby shortening overall processing duration of the inference task and increasing a processing speed of the inference task. In particular, through real-time monitoring and pre-transfer of an idle video memory resource, it can be thoroughly avoided that generation of the output token in the inference task is stopped due to insufficient video memory resources in the decode phase, and processing of the inference task and returning of a generated output can be accelerated as much as possible. As such, the video memory resources occupied by the KV cache and the ACT in the decode phase can be released as soon as possible, and reused in another inference task.

In particular, the technical solution of this specification can make full use of a characteristic that a quantity of video memory resources occupied by the ACT has a great change in the prefill phase and the decode phase. After the prefill phase is completed for a certain inference task, because only one output token needs to be stored in a video memory for an ACT of the inference task in the decode phase, most video memory resources occupied by the ACT generated in the inference task in the prefill phase can be temporarily transferred to a KV video memory resource pool (the first video memory resource pool), to cache a KV cache, thereby greatly improving utilization of these video memory resources, and helping achieve the above-mentioned technical effects such as increasing a processing speed of the inference task and improving an overall throughput of the inference task.

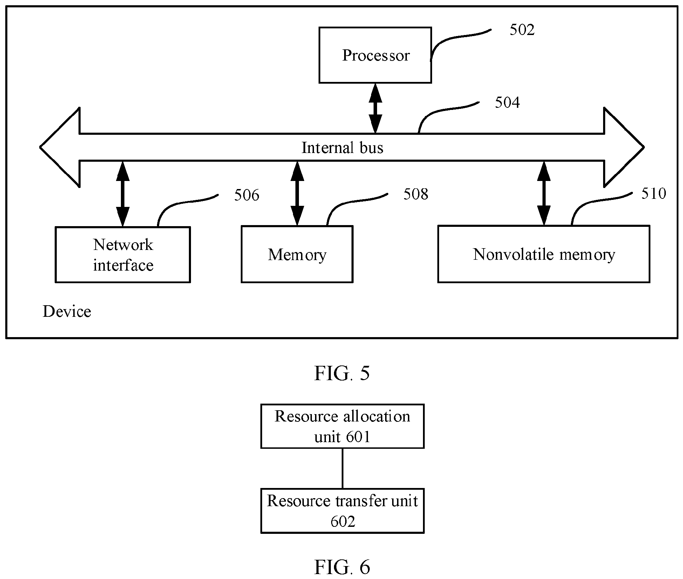

FIG. 5 is a schematic diagram illustrating a structure of a device, according to some example embodiments. Referring to FIG. 5, in terms of hardware, the device includes a processor 502, an internal bus 504, a network interface 506, a memory 508, and a nonvolatile memory 510, and certainly may further include hardware needed by another function. One or more embodiments of this specification can be implemented in a software manner. For example, the processor 502 reads a corresponding computer program from the nonvolatile memory 510 to the memory 508, and then runs the computer program. Certainly, in addition to a software implementation, one or more embodiments of this specification do not rule out other implementations, such as an implementation of a logic device or a combination of software and hardware. In other words, an execution body of the following processing procedure is not limited to each logic unit, and can be hardware or a logic device.

Referring to FIG. 6, a video memory management apparatus for large language model inference can be used in the device shown in FIG. 5, to implement the technical solution of this specification. The apparatus is used in a service device deployed with a large language model, and the apparatus can include:
a resource allocation unit 601, configured to allocate physical video memory resources on the service device, to separately map the physical video memory resources to a first video memory resource pool in which a cache object is a key-value cache and a second video memory resource pool in which a cache object is an intermediate activation value; and
a resource transfer unit 602, configured to: for an inference task submitted to the large language model, if determining that an idle video memory resource in any video memory resource pool in the first video memory resource pool and the second video memory resource pool is insufficient to cache a corresponding cache object for the inference task, temporarily transfer at least a portion of idle video memory resources in another video memory resource pool to the any video memory resource pool.

Optionally, the determining that an idle video memory resource in any video memory resource pool in the first video memory resource pool and the second video memory resource pool is insufficient to cache a corresponding cache object for the inference task includes:
after the inference task is received, separately calculating video memory resource demand of a key-value cache and an intermediate activation value of the inference task in a prefill phase; and
if a quantity of idle video memory resources in any video memory resource pool in the first video memory resource pool and the second video memory resource pool is less than calculated video memory resource demand corresponding to a corresponding cache object, determining that the idle video memory resources in the any video memory resource pool are insufficient to cache the corresponding cache object for the inference task.

Optionally, the apparatus further includes:
a task processing unit, configured to: if a quantity of idle video memory resources in each of the first video memory resource pool and the second video memory resource pool is not less than the calculated video memory resource demand corresponding to the corresponding cache object, advance the inference task to the prefill phase.

Optionally, the determining that an idle video memory resource in any video memory resource pool in the first video memory resource pool and the second video memory resource pool is insufficient to cache a corresponding cache object for the inference task includes:
in a process in which the inference task is in a decode phase, if a video memory resource in the first video memory resource pool has been depleted or a proportion of an idle video memory resource in the first video memory resource pool is less than a warning proportion, determining that the idle video memory resource in the first video memory resource pool is insufficient to cache the corresponding cache object for the inference task.

Optionally, the resource transfer unit 602 is specifically configured to:
determine, based on a service scenario to which the inference task belongs, a video memory resource occupation quantity of a key-value cache that is collected based on data of a historical inference task in the service scenario; and
calculate a difference between a quantity of idle video memory resources in the first video memory resource pool and the calculated video memory resource occupation quantity, and temporarily transfer an idle video memory resource corresponding to the difference in the second video memory resource pool to the first video memory resource pool.

Optionally,
the temporarily transferring an idle video memory resource corresponding to the difference in the second video memory resource pool to the first video memory resource pool includes: for first-time borrowing for the inference task in the decode phase, temporarily transferring the idle video memory resource corresponding to the difference in the second video memory resource pool to the first video memory resource pool; and
the resource transfer unit 602 is further specifically configured to: for non-first-time borrowing for the inference task in the decode phase, when an idle video memory resource in the second video memory resource pool is temporarily transferred to the first video memory resource pool, successively reduce a borrowing quantity of the idle video memory resource.

Optionally, the apparatus further includes:
a resource return unit, configured to: if an idle video memory resource in the second video memory resource pool is temporarily transferred to the first video memory resource pool for the inference task, return the transferred video memory resource from the first video memory resource pool to the second video memory resource pool after a decode phase of the inference task ends; and if an idle video memory resource in the first video memory resource pool is temporarily transferred to the second video memory resource pool for the inference task before a prefill phase, return the transferred video memory resource from the second video memory resource pool to the first video memory resource pool after the prefill phase ends.

Optionally, the resource allocation unit 601 is specifically configured to:
determine a maximum prompt length specified in the large language model; and
allocate a physical video memory resource to the second video memory resource pool by using the maximum prompt length as an assumed prompt length, and allocate a remaining physical video memory resource to the first video memory resource pool; or allocate a physical video memory resource to the second video memory resource pool by using an actual length less than the maximum prompt length as an assumed prompt length, and allocate a remaining physical video memory resource to the first video memory resource pool.

Optionally, the actual length is collected based on data of a historical inference task, and prompt lengths of at least a predetermined proportion of historical inference tasks are not greater than the actual length.

Optionally, the first video memory resource pool and the second video memory resource pool each record a logical video memory address, and each logical video memory address is mapped to an allocated physical video memory address; and the resource transfer unit 602 is specifically configured to:
release a mapping relationship between at least a portion of logical video memory addresses and allocated physical video memory addresses that is recorded in a page table of the another video memory resource pool, and perform remapping to a page table of the any video memory resource pool.

Based on the same concept as the above-mentioned method, this specification further provides an electronic device, including a processor, and a memory configured to store executable instructions of the processor. The processor runs the executable instructions to implement the steps of the method according to any one of the above-mentioned embodiments.

Based on the same concept as the above-mentioned method, this specification further provides a computer-readable storage medium. The computer-readable storage medium stores computer instructions. When the instructions are executed by a processor, the steps of the method according to any one of the above-mentioned embodiments are implemented.

Based on the same concept as the above-mentioned method, this specification further provides a computer program product, including a computer program/instructions. When the computer program/instructions is/are executed by a processor, the steps of the method according to any one of the above-mentioned embodiments are implemented.

## Claims

1. A video memory management method for large language model inference, applied to a service device deployed with a large language model, wherein the method comprises:
Allocating (102) physical video memory resources on the service device, to separately map the physical video memory resources to a first video memory resource pool in which a cache object is a key-value cache and a second video memory resource pool in which a cache object is an intermediate activation value; and
for an inference task submitted to the large language model, upon determining that an idle video memory resource in any video memory resource pool in the first video memory resource pool and the second video memory resource pool is insufficient to cache a corresponding cache object for the inference task, temporarily transferring (104) at least a portion of idle video memory resources in another video memory resource pool to the any video memory resource pool.

2. The method according to claim 1, wherein determining that an idle video memory resource in any video memory resource pool in the first video memory resource pool and the second video memory resource pool is insufficient to cache a corresponding cache object for the inference task comprises:
after the inference task is received, separately calculating video memory resource demand of a key-value cache and an intermediate activation value of the inference task in a prefill phase; and
upon determining that a quantity of idle video memory resources in any video memory resource pool in the first video memory resource pool and the second video memory resource pool is less than calculated video memory resource demand corresponding to a corresponding cache object, determining that the idle video memory resources in the any video memory resource pool are insufficient to cache the corresponding cache object for the inference task.

3. The method according to claim 2, further comprising:
upon determining that a quantity of idle video memory resources in each of the first video memory resource pool and the second video memory resource pool is not less than the calculated video memory resource demand corresponding to the corresponding cache object, advancing the inference task to the prefill phase.

4. The method according to claim 1, wherein determining that an idle video memory resource in any video memory resource pool in the first video memory resource pool and the second video memory resource pool is insufficient to cache a corresponding cache object for the inference task comprises:
in a process in which the inference task is in a decode phase, upon determining that a video memory resource in the first video memory resource pool has been depleted or a proportion of an idle video memory resource in the first video memory resource pool is less than a warning proportion, determining that the idle video memory resource in the first video memory resource pool is insufficient to cache the corresponding cache object for the inference task.

5. The method according to claim 4, wherein temporarily transferring (104) at least a portion of idle video memory resources in another video memory resource pool to the any video memory resource pool comprises:
determining, based on a service scenario to which the inference task belongs, a video memory resource occupation quantity of a key-value cache that is collected based on data of a historical inference task in the service scenario; and
calculating a difference between a quantity of idle video memory resources in the first video memory resource pool and the calculated video memory resource occupation quantity, and temporarily transferring an idle video memory resource corresponding to the difference in the second video memory resource pool to the first video memory resource pool.

6. The method according to claim 5, wherein temporarily transferring an idle video memory resource corresponding to the difference in the second video memory resource pool to the first video memory resource pool comprises: for first-time borrowing for the inference task in the decode phase, temporarily transferring the idle video memory resource corresponding to the difference in the second video memory resource pool to the first video memory resource pool; and
temporarily transferring (104) at least a portion of idle video memory resources in another video memory resource pool to the any video memory resource pool further comprises: for non-first-time borrowing for the inference task in the decode phase, when an idle video memory resource in the second video memory resource pool is temporarily transferred to the first video memory resource pool, successively reducing a borrowing quantity of the idle video memory resource.

7. The method according to claim 1, further comprising:
upon determining that an idle video memory resource in the second video memory resource pool is temporarily transferred to the first video memory resource pool for the inference task, returning the transferred video memory resource from the first video memory resource pool to the second video memory resource pool after a decode phase of the inference task ends; and
upon determining that an idle video memory resource in the first video memory resource pool is temporarily transferred to the second video memory resource pool for the inference task before a prefill phase, returning the transferred video memory resource from the second video memory resource pool to the first video memory resource pool after the prefill phase ends.

8. The method according to claim 1, wherein allocating a physical video memory resource on the service device comprises:
determining a maximum prompt length specified in the large language model; and
allocating a physical video memory resource to the second video memory resource pool by using the maximum prompt length as an assumed prompt length, and allocating a remaining physical video memory resource to the first video memory resource pool; or allocating a physical video memory resource to the second video memory resource pool by using an actual length less than the maximum prompt length as an assumed prompt length, and allocating a remaining physical video memory resource to the first video memory resource pool.

9. The method according to claim 8, wherein the actual length is collected based on data of a historical inference task, and prompt lengths of at least a predetermined proportion of historical inference tasks are not greater than the actual length.

10. The method according to claim 1, wherein the first video memory resource pool and the second video memory resource pool each record a logical video memory address, and each logical video memory address is mapped to an allocated physical video memory address; and temporarily transferring (104) at least a portion of idle video memory resources in another video memory resource pool to the any video memory resource pool comprises:
releasing a mapping relationship between at least a portion of logical video memory addresses and allocated physical video memory addresses that is recorded in a page table of the another video memory resource pool, and performing remapping to a page table of the any video memory resource pool.

11. An electronic device comprising a memory and a processor, wherein the memory stores executable instructions that, in response to execution by the processor, cause the electronic device to implement steps of the method according to any one of claims 1 to 10.

12. A computer-readable storage medium comprising instructions stored therein that, when executed by a processor of an electronic device, causes the electronic device to implement steps of the method according to any one of claims 1 to 10.

13. A computer program comprising instructions stored in a computer-readable storage medium, when executed by a processor of an electronic device, causes the electronic device to implement steps of the method according to any one of claims 1 to 10.

14. A video memory management apparatus for large language model inference, applied to a service device deployed with a large language model, comprising means for performing steps of the method of any of claims 1 to 10.
